# EUROPEAN PATENT SPECIFICATION

(11) **EP 0 867 311 B1**
(45) Date of publication and mention of the grant of the patent: **11.06.2003**
(21) Application number: 98302249.2
(22) Date of filing: 25.03.1998
(51) Int. Cl.: B60C 11/04, B60C 11/03, B60C 11/11, B60C 11/117

(54) **Vehicle tyre**
Fahrzeugreifen
Bandage pneumatique pour véhicule

(30) Priority: 26.03.1997 GB 9706238
(43) Date of publication of application: 30.09.1998
(73) Proprietor: Sumitomo Rubber Industries Ltd., Kobe-shi, Hyogo-ken (JP)
(72) Inventor: Marriott, Peter Robert, Warwickshire CV9 2LP (GB)
(74) Representative: Stewart, Charles Geoffrey

(56) References cited:
- FR-A- 1 301 402
- GB-A- 2 313 814
- US-A- 2 579 512
- US-A- 4 667 718
- PATENT ABSTRACTS OF JAPAN vol. 017, no. 598 (M-1504), 2 November 1993 (1993-11-02) & JP 05 178019 A (YOKOHAMA RUBBER CO LTD:THE), 20 July 1993 (1993-07-20)
- PATENT ABSTRACTS OF JAPAN vol. 011, no. 269 (M-621), 2 September 1987 (1987-09-02) & JP 62 071708 A (OHTSU TIRE & RUBBER CO LTD), 2 April 1987 (1987-04-02)
- PATENT ABSTRACTS OF JAPAN vol. 015, no. 120 (M-1096), 25 March 1991 (1991-03-25) & JP 03 010909 A (BRIDGESTONE CORP), 18 January 1991 (1991-01-18)

## Description

This invention relates to a vehicle tyre having a ground contacting tread which is particularly adapted to be quiet in running and has improved performance in wet conditions.

The problem of tyre generated noise is the subject of increasingly stricter legislation concerned with reducing overall noise levels generated by moving vehicles. Thus the problem of minimising tyre generated or so-called "pass-by" noise is becoming an increasingly important aspect of tyre design.

In order for tyres to perform well under all conditions it is normal for the ground contacting tread region to be provided with grooves. In wet conditions such grooves assist in clearing bulk water from the contact area between the tyre tread and the road surface and thus help prevent aquaplaning and therefore prevent loss of steering control of the vehicle.

Conventional tyre tread pattern design for good wet performance has employed circumferentially continuous straight grooves which are often relatively wide and deep. However a serious problem with such continuous straight grooves is noise generated by the so-called "organ-pipe phenomenon" by which resonance occurs in the air-space formed by the groove of the moving tyre and the road surface which acts like a musical pipe. The particular problem with continuous circumferential grooves is that the length of the 'organ-pipe' in the tyre contact area is sufficiently great to generate frequencies which are close to those most troublesome to a driver and which also tend to reinforce other resonances occurring between the tyre and the road surface.

In previous attempts to reduce the "organ-pipe" phenomenon, protuberances or constructions have been placed in the circumferential grooves in order to suppress or disturb the resonance. Such groove modifications have not only failed to mitigate the tyre noise problem but have also shown a detrimental effect on the wet performance of the tyre by impeding the flow of water through the grooves.

In tyre tread patterns comprising blocks, rather than ribs such as disclosed in US 4 667 718 it is known to have the short circumferentially extending grooves which separate the blocks offset with respect to one another in the axial direction. Such short grooves as are then provided do not suffer from any 'organ-pipe' effect.

Accordingly it is an object of the present- invention to provide in a ribbed tread tyre a pattern having low noise and improved wet performance.

Accordingly the invention provides a tyre as set out in claim 1 and its subsidiary claims.

Preferably at least five different lengths of longitudinal grooves or more preferably at least nine different lengths are provided. Most preferably the longitudinal grooves are each a different length to each of the others.

In a preferred embodiment the longitudinal grooves are each straight grooves disposed at 0° to the tyre circumferential direction.

Further aspects of the invention will become apparent from the following description by way of example only, of one embodiment with reference to the accompanying drawings in which:-
Figure 1 shows a view of a tyre tread according to the present invention;
Figure 2 shows a cross-section of a pneumatic tyre according to the present invention having the tread shown in Figure 1 taken in a radial plane through Y-Y';
Figure 3 shows the results of an aquaplaning test;
Figure 4 shows the results of a passby noise test; and
Figure 5 is a tyre tread pattern comprising continuous circumferential grooves.

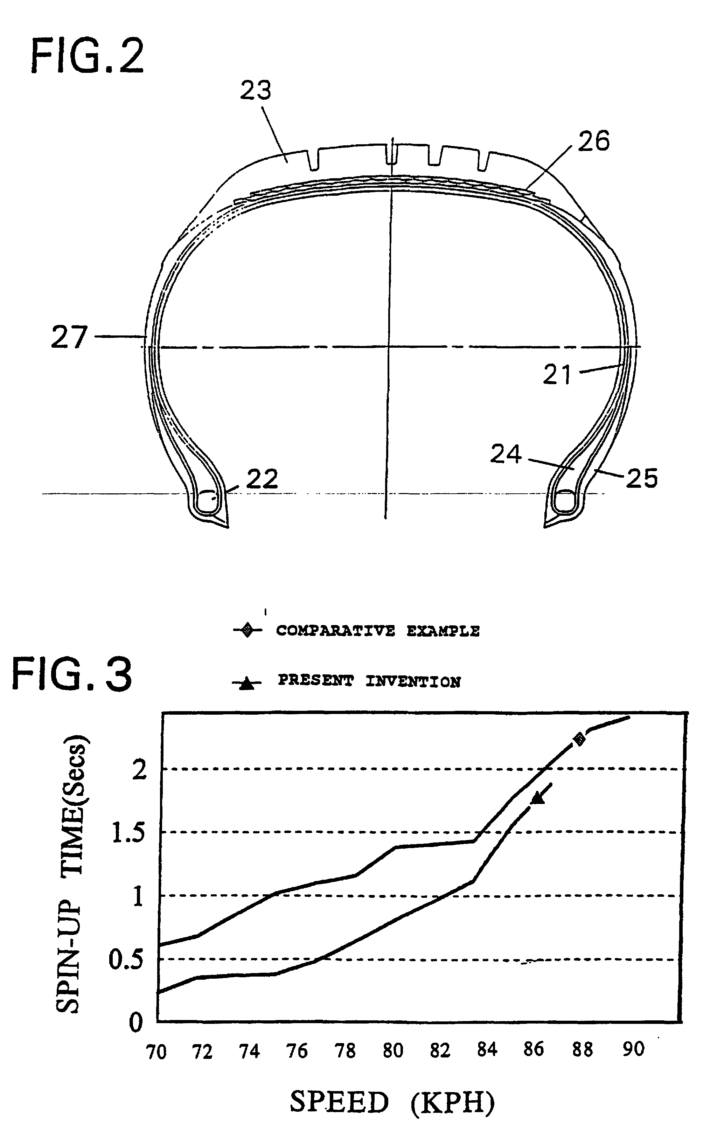

Shown in cross-section in Figure 2 is a pneumatic tyre according to the present invention and having a conventional radial construction. Accordingly the tyre has a carcass ply 21 comprising radial cords extending between bead regions 25 through sidewall regions 27 and a tread region 23. In each bead region the carcass ply 21 is secured by being turned around a circumferentially extending inextensible bead core 22 from the axially inside to the outside. The tyre tread region 23 is reinforced by a belt or breaker 26 disposed radially outward of the carcass 21.

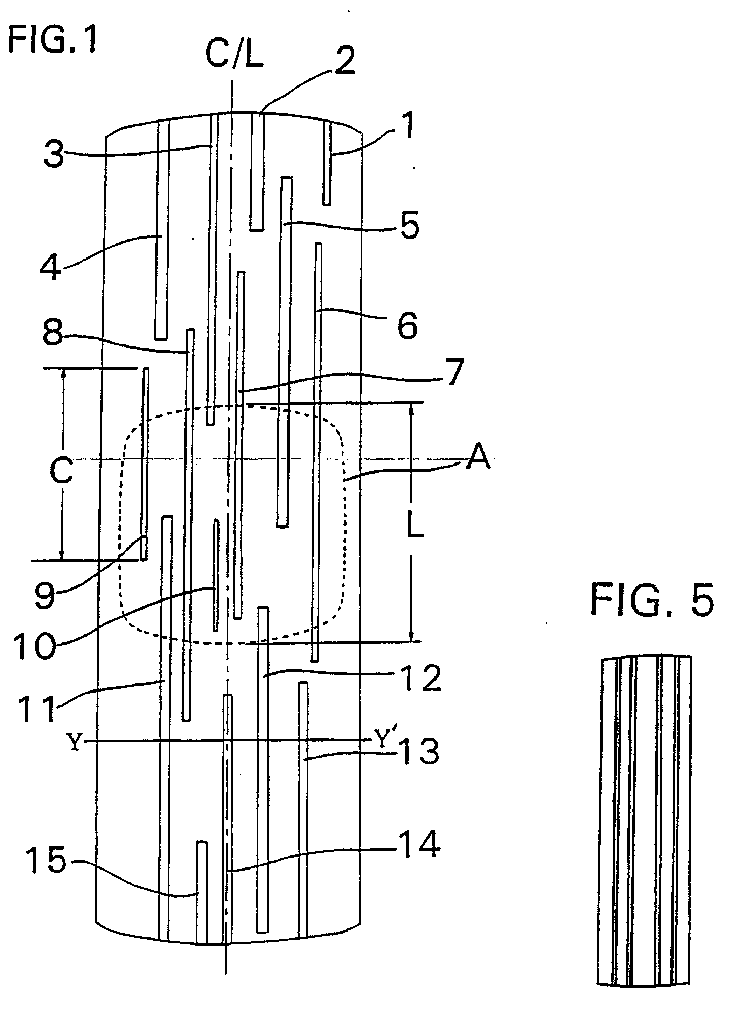

On the radially outer surface of the tread region 23 there are provided a series of circumferentially extending full depth tread grooves. As shown in Figure 1 these longitudinal tread grooves 1-15 are discontinuous in the circumferential direction. According to the present invention the circumferential lengths C of the longitudinal grooves 1-15 have at least three different values. Preferably the grooves have at least five and more preferably at least nine different lengths C. In the embodiment shown in Figure 1 the grooves have the most preferable configuration in that they are all different in length.

It is also preferable that the lengths of the circumferential grooves 1-15 are between half and twice the circumferential length L of the tread/ground contact area A denoted in Figure 1 by the broken line.

Also according to the present invention tread grooves which are circumferentially adjacent are disposed in different axial positions with respect to each other. Thus in Figure 1 each of the pair of grooves 1 & 5, 5 & 12, 2 & 7, 3 & 10, 8 & 15, 4 & 9, 6 & 13, 5 & 12 etc. are disposed at different axial positions with respect to the tread centreline C/L. Most preferably as in Figure 1 each circumferentially extending tread groove 1-15 is disposed in a unique axial position.

The discontinuous tread grooves may be all the same axial widths or may have differing widths as shown. Also whilst they may extend at an acute angle to the circumferential centreline C/L, preferably they are substantially parallel to the centreline C/L as shown in the present embodiment.

A tyre tread pattern according to the present invention has shown reduced levels of noise with improved wet performance.

To illustrate the above improved properties tyres according to the present invention having the pattern shown in Figure 1 were tested against comparative example tyres of the same size and construction having a conventional pattern of four straight circumferential grooves shown in Figure 5. Both types of tyre had the same overall rubber-to-groove area or so-called `land/sea' ratio of 70/30 and both had the same overall groove volume.

The wet performance of the tyres was assessed by evaluating the resistance to aquaplaning by means of the so-called "spin-up" test. In this test the vehicle rear brakes are disconnected and the vehicle is driven at a constant speed and in a straight line into deep water lying on smooth concrete. The brakes are then applied to lock the front wheels and thus cause aquaplaning. The brakes are then released and the time taken for the front wheels to spin-up to same speed as the rear wheels is measured electronically. A shorter 'spin-up' time is indicative of a better aquaplaning resistance. Results of tests on both tyre types at speeds from 70 to 90kph are shown in Figure 3, from which it can be seen that the tyres of the present invention had significantly shorter 'spin-up' times and thus markedly improved aquaplaning resistance over the conventional comparative tyres at all speeds.

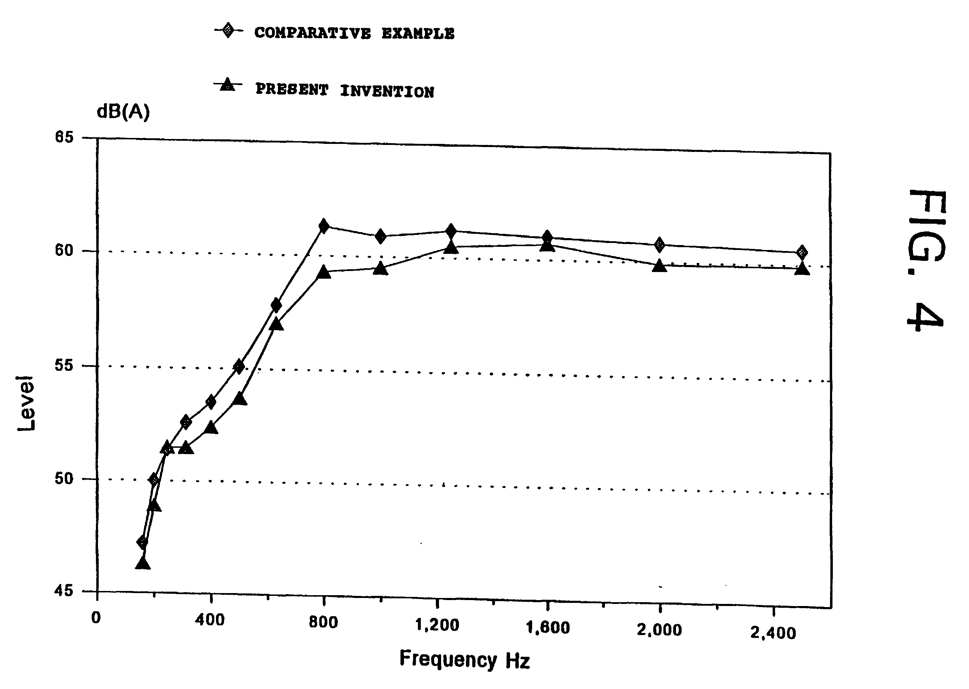

For an assessment of noise performance a passby noise test was carried out using a front wheel drive vehicle driven in a straight line on a smoothly textured impervious road surface conforming to ISO 10844. The vehicle had test tyres fitted to the rear wheels and slick tyres fitted to the front wheels. All the tyres were inflated to their scheduled pressure and run at 80% of their rated maximum load. Shown in Figure 4 are the noise results of the vehicle coasting at 80kph. It is evident from the noise spectra presented in Figure 4 that the tyre of the present invention was quieter than the conventional comparative over the entire frequency range of 200 to 2,400Hz.

Whilst the present invention has been illustrated by the above-described embodiment which has only circumferential grooves the inventive tyre may also have laterally extending or transverse tread grooves. Such laterally extending grooves may extend fully through the tread ribs to divide the rib into a row of tread blocks.

## Claims

1. A vehicle tyre comprising a ground contacting tread (23) having a plurality of circumferentially extending longitudinal grooves (1-15) spaced apart across the axial width of the tread to divide the tread into circumferentially extending tread ribs wherein the longitudinal grooves (1-15) are discontinuous and have at least three different lengths (C) in the circumferential direction, circumferentially adjacent longitudinal grooves (1&5,5&12,2&7,3&10,8&15,4&9,6&13,5&12) are displaced relative to each other in the axial direction such that each extends in a different plane and the longitudinal grooves (1-15) have a length (C) in the circumferential direction in the range of 0.5 to 2.0 times the maximum circumferential length (L) of the ground contacting area (A) of the tyre tread in the condition that the tyre is mounted on its scheduled wheelrim, inflated to its scheduled pressure and subjected to its scheduled load.

2. A tyre according to claim 1, **characterised in that** the longitudinal grooves (1-15) have at least five different lengths (C).

3. A tyre according to either of claims 1 or 2, **characterised in that** the longitudinal grooves (1-15) have at least nine different lengths (C).

4. A tyre according to any of claims 1 to 3, **characterised in that** the longitudinal grooves (1-15) are all different lengths.

5. A tyre according to any of claims 1 to 4, **characterised in that** all the longitudinal grooves (1-15) are displaced relative to each other such that each extends in a different plane.

6. A tyre according to any of claims 1 to 5, **characterised in that** the longitudinal grooves (1-15) are disposed at 0° to the tyre circumferential direction (C/L).

## Patentansprüche

1. Fahrzeugreifen mit einem den Boden berührenden Laufstreifen (23), der eine Vielzahl von sich in Umfangsrichtung erstreckenden Längsrillen (1-15) aufweist, die voneinander über die axiale Breite des Laufstreifens hinweg beabstandet angeordnet sind, um den Laufstreifen in sich in Umfangsrichtung erstreckende Laufstreifenrippen zu unterteilen, wobei die Längsrillen (1-15) diskontinuierlich sind und mindestens drei unterschiedliche Längen (C) in der Umfangsrichtung aufweisen, in Umfangsrichtung benachbarte Längsrillen (1&5, 5&12, 2&7, 3&10, 8&15, 4&9, 6&13, 5&12) relativ zueinander in der axialen Richtung derart verschoben sind, dass sie sich jeweils in einer unterschiedlichen Ebene erstrecken, und die Längsrillen (1-15) eine Länge (C) in der Umfangsrichtung im Bereich des 0,5- bis 2,0-fachen der maximalen Umfangslänge (L) der Aufstandsfläche (A) des Reifenlaufstreifens in dem Zustand aufweisen, in dem der Reifen auf seine vorgesehene Radfelge aufgezogen, auf seinen vorgesehenen Druck aufgepumpt und seiner vorgesehenen Last ausgesetzt ist.

2. Reifen nach Anspruch 1, **dadurch gekennzeichnet, dass** die Längsrillen (1-15) mindestens fünf unterschiedliche Länge (C) aufweisen.

3. Reifen nach Anspruch 1 oder 2, **dadurch gekennzeichnet, dass** die Längsrillen (1-15) mindestens neun unterschiedliche Längen (C) aufweisen.

4. Reifen nach einem der Ansprüche 1 bis 3, **dadurch gekennzeichnet, dass** die Längsrillen (1-15) alle unterschiedliche Längen aufweisen.

5. Reifen nach einem der Ansprüche 1 bis 4, **dadurch gekennzeichnet, dass** alle Längsrillen (1-15) relativ zueinander derart verschoben sind, dass sie sich jeweils in einer unterschiedlichen Ebene erstrecken.

6. Reifen nach einem der Ansprüche 1 bis 5, **dadurch gekennzeichnet, dass** die Längsrillen (1-15) unter 0° zur Umfangsrichtung (C/L) des Reifens angeordnet sind.

## Revendications

1. Pneumatique comprenant une bande de roulement (23) destinée à être au contact du sol et possédant plusieurs gorges longitudinales disposées circonférentiellement (1 - 15) sur la largeur axiale de la bande de roulement afin qu'elles divisent la bande de roulement en nervures circonférentielles de bande de roulement, dans lequel les gorges longitudinales (1 - 15) sont discontinues et ont au moins trois longueurs (C) en direction circonférielle, les gorges longitudinales adjacentes circonférentiellement (1 & 5, 5 & 12, 2 & 7, 3 & 10, 8 & 15, 4 & 9, 6 & 13, 5 & 12) sont décalées mutuellement dans la direction axiale afin que chacune s'étende dans un plan différent et que les gorges longitudinales (1 - 15) aient une longueur (C) en direction circonférentielle comprise entre 0,5 et 2,0 fois la longueur circonférentielle maximale (L) de la surface (A) de contact avec le sol de la bande de roulement du pneumatique lorsque le pneumatique est monté sur la jante de roue programmée, gonflé à sa pression programmée et soumis à sa charge programmée.

2. Pneumatique selon la revendication 1, **caractérisé en ce que** les gorges longitudinales (1 - 15) ont au moins cinq longueurs différentes.

3. Pneumatique selon la revendication 1 ou 2, **caractérisé en ce que** les gorges longitudinales (1 - 15) ont au moins neuf longueurs différentes (C).

4. Pneumatique selon l'une quelconque des revendications 1 à 3, **caractérisé en ce que** les gorges longitudinales (1 - 15) ont toutes des longueurs différentes.

5. Pneumatique selon l'une quelconque des revendications 1 à 4, **caractérisé en ce que** toutes les gorges longitudinales (1 - 15) sont décalées les unes par rapport aux autres afin que chacune d'elle s'étende dans un plan différent.

6. Pneumatique selon l'une quelconque des revendications 1 à 5, **caractérisé en ce que** les gorges longitudinales (1 - 15) sont disposées suivant un angle de 0° par rapport à la direction circonférentielle (C/L) du pneumatique.
